# EUROPEAN PATENT SPECIFICATION

(11) **EP 2 732 147 B1**
(45) Date of publication and mention of the grant of the patent: **08.07.2015**
(21) Application number: 12712733.0
(22) Date of filing: 15.03.2012
(51) Int. Cl.: F02M 37/16, F02M 37/22

(54) **FILTERING UNIT**
FILTEREINHEIT
UNITÉ DE FILTRAGE

(30) Priority: 14.07.2011 IT RE20110053
(43) Date of publication of application: 21.05.2014
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/IB2012/000507
(87) International publication number: WO 2013/008064

(56) References cited:
- WO-A1-2006/136254
- JP-A- 2006 037 801
- US-A- 5 207 898
- US-A- 5 868 931

## Description

### FIELD OF THE INVENTION

The present invention regards a filtering unit.

More in particular, the present invention regards a filtering unit for filtering fuel for internal combustion engines, in automotive applications, for example for motor vehicles, cars, commercial vehicles and work machines.

### PRIOR ART

As known, fuel filtering is generally obtained by means of a filtering unit comprising an outer casing provided with a body substantially shaped like a drinking glass, whose open end is closed by a cover provided with an inlet for the fluid to be filtered and an outlet for the filtered fluid; a filtering cartridge adapted to subdivide the volume within the casing into two separate chambers, among which a first chamber communicating with the inlet and a second chamber communicating with the outlet, is contained within the casing.

In this manner, the fluid flowing from the inlet towards the outlet of the filter is forced to traverse the filtering membrane which withholds the impurities possibly present therein and, possibly, separates the water present in the fuel.

A typical filtering cartridge comprises a tubular-shaped filtering septum, for example a pleated filtering septum or a depth septum, and two support plates which are fixed to the opposite ends of the filtering septum.

In the cover there are provided an inlet conduit, connected to the fuel tank by means of said inlet, and an outlet conduit which terminates with said outlet and conveys the filtered fuel towards the combustion chamber.

The cover also generally houses a priming pump which can be actuated manually by the user adapted to create vacuum in the volume within the casing and, thus, "draw" fuel from the tank to fill the filtering unit.

However, the filtering units of the known type reveal the drawback lying in the fact that, during normal operation of the filtering unit, i.e. when the fuel flows therethrough to feed combustion in the combustion chamber, the fuel is however forced to flow through the supply pump with considerable loss of fluid dynamic head in the fuel supply system.

WO 2006/136254 A1 discloses a filtering unit with a priming pump arranged between a pre-filter and a main filter.

US 5207898 A discloses a filtering unit with a priming pump and a by pass valve arranged on the inlet side of the filter.

An object of the present invention is that of overcoming the previously mentioned drawbacks of the prior art, through a simple, rational and inexpensive solution.

Such objects are attained by the characteristics of the invention indicated in the independent claims. The dependent claims outline preferred and/or particularly advantageous aspects of the invention.

### DESCRIPTION OF THE INVENTION

Particularly, the invention provides a filtering unit comprising:
- an outer casing provided with at least one inlet conduit for a fluid to be filtered and one outlet conduit for a filtered fluid,
- a filtering cartridge received within said casing, so as to filter the fluid which flows from the inlet conduit towards the outlet conduit, and
- a pump for priming the fluid arranged on said outlet conduit adapted to create vacuum in the volume within the casing.

According to the invention, the unit comprises a bypass conduit adapted to bypass the priming pump and intercepted by at least one automatic valve adapted to open and close the bypass conduit.

Due to such solution, the fluid which traverses the filtering unit, under normal conditions of operation thereof, does not traverse the supply pump and flows through the unit with considerable loss of head, while the supply pump can be actuated whenever required with the engine OFF, for example when filling the filtering unit for the first time or whenever replacing the filtering cartridge.

### BRIEF DESCRIPTION OF THE DRAWINGS

Further characteristics and advantages of the invention will be apparent from reading the following description provided by way of non-limiting example, with reference to the figures illustrated in the attached drawings.
Figure 1 is a section along a longitudinal plane of a first embodiment of a filtering unit, according to the invention.
Figure 2 is a section along a longitudinal plane of an embodiment of the filtering unit, according to the invention.
Figure 3 is a diagram of the system of the filtering unit, according to the invention.

### PREFERRED EMBODIMENT OF THE INVENTION

With particular reference to such figures, a filtering unit, for example, for filtering fuel in internal combustion engines, in particular motor vehicle engines, trucks, commercial vehicles or self-propelled work machines is indicated in its entirety with 100.

The filtering unit 100 comprises an outer casing, generally indicated with 1, which is defined by a lower body 10 configured like a drinking glass, and by an upper cover 11 adapted to close the drinking-glass-shaped body 10 by interposing a sealing gasket 12.

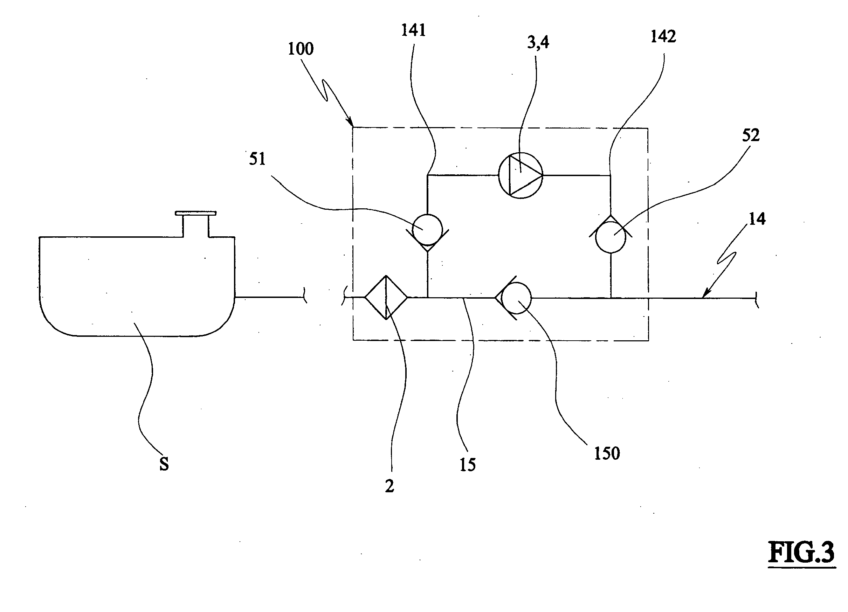

In the shown embodiments, the cover 11 is a monolithic body comprising an inlet conduit 13 for the fuel to be filtered, connected (as observable in the diagram of figure 3) to a fuel tank S, and an outlet conduit 14 for the filtered fuel; such inlet and outlet conduits terminate at the surface of the cover which faces towards the internal of the casing 1.

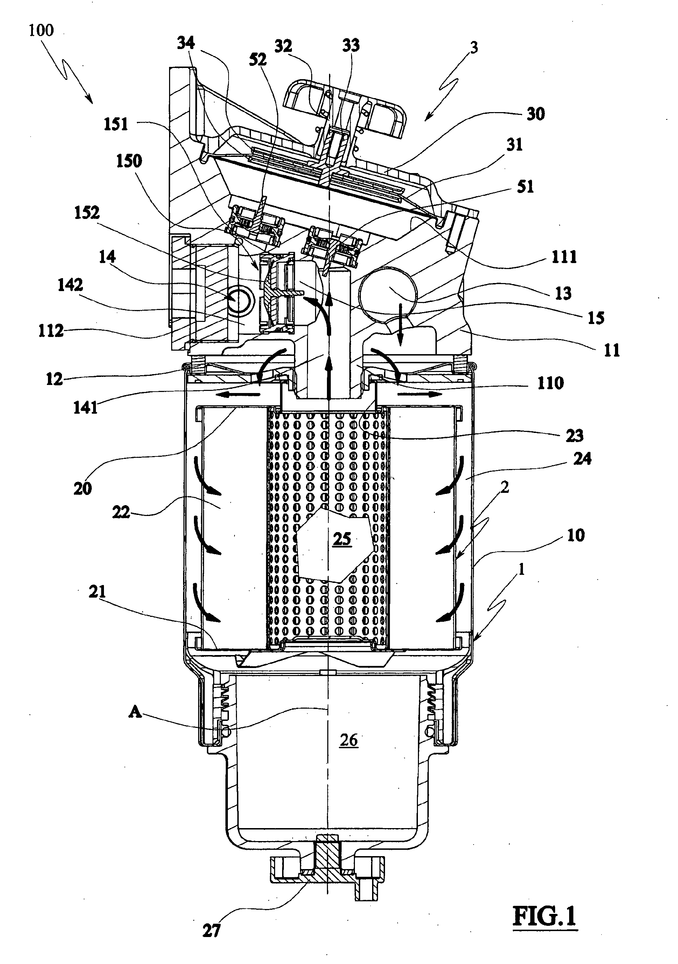

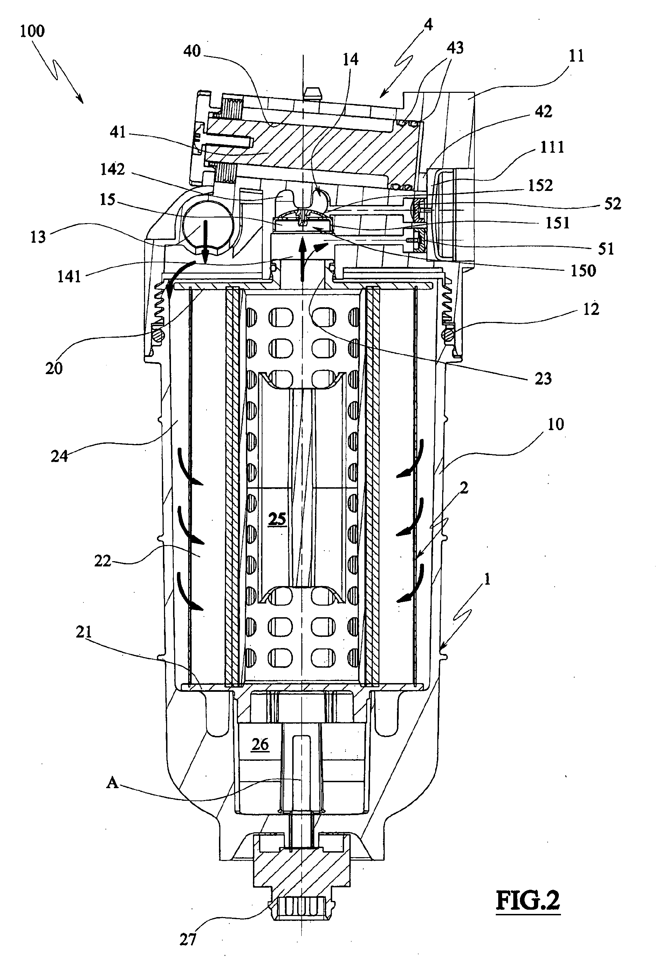

In the examples shown in figures 1 and 2, within the casing 1 there is further received a filtering cartridge, generally indicated with 2, which comprises an upper support plate 20 and a lower support plate 21, which are fixed to the opposite ends of a tubular-shaped filtering septum 22, a pleated septum in this case, but it can also be of the depth polymeric septum type, which defines and delimits a volume within the substantially cylindrical filtering cartridge 2.

The upper support plate 20 has a central hole, centred on the longitudinal axis A of the filtering septum 22.

The upper support plate 20 further comprises a hollow shank 23 which fits or is fitted, by interposing a sealing ring or by interference, for example directly, in the outlet conduit 14 obtained in the cover 11.

The inlet conduit 13 obtained in the cover 11 connects, for example, the lateral wall of the cover 11 with the lower surface facing towards the internal of the casing 1.

Due to the previously described configuration, the filtering cartridge 2 subdivides the volume within the casing 1 into a first chamber 24, defined outside the filtering septum 22, which communicates with the inlet conduit 13 of the fuel to be filtered and into a second chamber 25, coinciding with the volume inside the filtering septum 22, which communicates with the outlet conduit 14 for the filtered fuel; the fluid traverses, in this case, the filtering septum 22 from outside inwards.

At the base of the drinking-glass-shaped body 10, below the lower support plate 21 of the cartridge 2, there is present a collection chamber 26 communicating with the external of the casing 1 through a hole closed by a tap 27.

In the chamber there can be housed, for example, a level sensor which signals the water level that causes the opening of the tap 27 and/or a fuel heater.

The filtering unit 100, in both embodiments illustrated, comprises a pump 3,4 for priming the fluid which, for example, is housed in the cover 11 and is arranged on the outlet conduit 14 for the fuel.

The priming pump 3,4 is adapted to create vacuum in the volume within the casing 1, so as to draw the fuel through the inlet conduit 13, for example in the steps of filling the casing for the first time or whenever it is emptied. Furthermore, for the purposes of the present invention, in the cover 11 there is obtained a bypass conduit 15 adapted to bypass the priming pump 3,4, which is intercepted by at least one automatic bypass valve 150 adapted to open and close the bypass conduit.

In the first embodiment shown in figure 1, the priming pump 3 is of the type with a volumetric reciprocating membrane pump.

The outlet conduit 14 has a first section 141 which connects the lower surface of the cover 11 (through a shank 110 which is sealingly inserted into the hollow shank 23 of the upper support plate 20) with a compartment 111, adapted to house the priming membrane pump 3 and serve as a variable volume chamber for fuel intake and delivery.

The compartment 111 is circular-shaped and it is closed by a rigid disc 30 from which there descends a shell bearing an elastic membrane 31.

The disk 30 has a seat for a reel 32 at whose centre there is slidingly received a stem 33 fixed at the centre to the membrane 31 through plates 34 which tighten the membrane from opposite sides.

The first section 141, which is traversed by the fuel in the direction extending from the lower surface of the cover 11 to the compartment 111, is intercepted by a first unidirectional valve 51, for example of the mushroom valve type, which opens only towards the internal of the compartment 111.

From compartment 111 there then derives a second section 142 of the outlet conduit 14 which is connected to the external surface, for example lateral, of the cover 11, which is intercepted by a second unidirectional valve 52, also for example of the mushroom valve type, which opens only towards the external of the compartment 111.

The bypass conduit 15 connects an area of the first section 141, arranged upstream of the first unidirectional valve 51 (in the direction of flow of the fluid imparted by the priming membrane pump 3), with an area of the second section 142 of the outlet conduit 14, arranged downstream of the second unidirectional valve (in the direction of flow of the fluid imparted by the priming membrane pump).

The automatic valve 150 is, for example, also a unidirectional valve of the mushroom valve type, which comprises a substantially cylindrical valve body 151 sealingly inserted within the bypass conduit 15, for example through an access port received in the lateral wall of the cover 11 and normally closed by a cap 112.

The valve body 151 comprises a rigid circular diaphragm provided with at least one hole; in the circular diaphragm there is inserted the stem of a mushroom shutter 152, whose head, which is made of elastically yieldable material for example made of fluorosilicone, is adapted to open and close the hole (or several holes) obtained in the diaphragm through an elastic deformation thereof; however, the stem of the mushroom shutter (rigid) can be alternatively provided sliding, within a central through hole further obtained in the diaphragm, between two end stop positions, the head of the mushroom shutter being adapted to open and close the hole (or several holes) obtained in the diaphragm.

The automatic valve 150 is adapted to allow the outflow of fuel along the bypass conduit 15 only in the direction of flow of the fuel from the first section 141 to the second section 142 of the outlet conduit 14, i.e. the automatic valve 150 opens at a positive pressure in the first section 141 and closes upon the occurrence of a vacuum in the first section.

The priming membrane pump 3, the first and the second unidirectional valve, respectively 51 and 52, and the automatic valve 150 are configured so as to synchronise the opening of the first unidirectional valve 51 with the closure of the automatic valve 150 (and of the second unidirectional valve 52) and, selectively, the opening of the second unidirectional valve 52 with the closure of the automatic valve (and the first unidirectional valve 51).

In practice, the priming membrane pump 3 in the intake step is such to create vacuum in the compartment 111, thus opening the first unidirectional valve 51 and simultaneously closing the second unidirectional valve 52, and thus creating depression in the first section 141 of the outlet conduit 14, thus closing the automatic valve 150.

Instead, in the delivery step of the priming membrane pump 3, a positive pressure in the compartment 111 opens the second unidirectional valve, simultaneously closing the first unidirectional valve 51; the pressure increase in the second section 142 (downstream of the second unidirectional valve 52) is also such to close the automatic valve 150.

Due to such configuration, when the priming membrane pump 3 is actuated, for example manually by a user, it is obtained that the automatic valve 150 closes the bypass conduit 15.

Furthermore, the automatic valve 150 and the bypass conduit 15 are configured so as to have less loss of head for the fluid with respect to the passage thereof through the first section 141 and the first unidirectional valve 51, so that the bypass conduit 15, when the priming membrane pump 3 is not operating, represents a preferential passage for the fluid.

For example, the automatic valve 150 can be configured so as to have lower resistance to the passage of the fluid dimensioning the opening preload (where a preloaded spring is provided for between the mushroom shutter 152 and the diaphragm of the valve body 151) and/or the opening of the gap for the passage of the fluid, so that this passage gap is larger than the passage gap offered to the fuel by the first unidirectional valve 51.

In addition the bypass conduit 15 can be configured so that the passage section thereof is greater than the passage section of the first section 141 of the outlet conduit 14.

Such configuration allows, under normal operating conditions of the system - i.e. when the fuel traverses the filtering unit 10 to be conveyed to the combustion chamber of the engine -, the first unidirectional valve 51 to remain closed (with the automatic valve 150 open) and all the fuel flows from the first section 141 to the second section 142 of the outlet conduit 14, exclusively through the bypass conduit 15.

In the second embodiment shown in figure 2, in which the reference numbers for the parts common to the previously described first embodiment of figure 1 were maintained unaltered in this case, the priming pump 4 is of the type of a volumetric reciprocating piston pump.

The outlet conduit 14 in this case also has a first section 141 connecting the lower surface of the cover 11 (through a port in which there is sealingly inserted a hollow shank 23 of the upper support plate 20) to a compartment 111 obtained in the cover 11.

In the cover 11 there is also housed a cylindrical chamber 40 for housing a piston 41 of the priming piston pump 41.

The cylindrical chamber 40 has an open end (provided with annular gaskets within which the piston 41 slides) from which there protrudes an end of the piston that can be gripped.

In the bottom of the cylindrical chamber 40 there is obtained an opening 42 which is arranged in communication with the compartment 111 (obtained in the cover 11), which is circular-shaped and it is closed by a closure disc accessible from outside from one side of the cover 11.

The head of the piston 41 is provided with annular gaskets 43 adapted to delimit a variable volume chamber for fuel intake and delivery at the bottom of the cylindrical chamber 40 and, thus, in communication with the compartment 111.

The first section 141, which is traversed by the fuel in the direction extending from the lower surface of the cover 11 to the compartment 111, is intercepted by a first unidirectional valve 51, for example of the mushroom valve type, which opens only towards the internal of the compartment 111.

In addition, from the compartment 111 there derives a second section 142 of the outlet conduit 14 which is connected to the external surface, for example lateral, of the cover 11, which is intercepted by a second unidirectional valve 52, for example also of the mushroom valve type, which opens only towards the external of the compartment 111.

The bypass conduit 15 connects an area of the first section 141, arranged upstream of the first unidirectional valve 51 (in the direction of flow of the fluid imparted by the priming piston pump 4), with an area of the second section 142 of the outlet conduit 14, arranged downstream of the second unidirectional valve 52 (in the direction of flow of the fluid imparted by the priming piston pump).

The automatic valve 150 is, for example, also a unidirectional valve of the mushroom valve type, which comprises a substantially cylindrical valve body 151 sealingly inserted inside the bypass conduit 15.

The valve body 151 comprises a rigid circular diaphragm provided with at least one hole; in the circular diaphragm there is inserted the stem of a mushroom shutter 152, whose head, which is made of elastically yieldable material for example in fluorosilicone, is adapted to open and close the hole (or more holes) obtained in the diaphragm through an elastic deformation thereof; however stem of the mushroom shutter (rigid) can be provided alternatively sliding, within a central through hole further obtained in the diaphragm, between two end stop positions, the head of the mushroom shutter being adapted to open and close the hole (or several holes) obtained in the diaphragm.

The automatic valve 150 is adapted to allow the outflow of fuel along the bypass conduit 15 only in the direction of flow of the fuel from the first section 141 to the second section 142 of the outlet conduit 14, i.e. the automatic valve 150 opens at a positive pressure in the first section 141 and closes upon the occurrence of a vacuum in the first section.

The priming piston pump 4, the first and the second unidirectional valve, respectively 51 and 52, and the automatic valve 150 are configured so as to synchronise the opening of the first unidirectional valve 51 with the closure of the automatic valve 150 (and of the second unidirectional valve 52) and, selectively, the opening of the second unidirectional valve 52 with the closure of the automatic valve (and the first unidirectional valve 51).

In practice, the priming piston pump 4 in the intake step is such to create vacuum in the compartment 111, thus opening the first unidirectional valve 51 and simultaneously closing the second unidirectional valve 52, and thus creating vacuum in the first section 141 of the outlet conduit 14, hence closing the automatic valve 150.

Instead, in the delivery step of the priming piston pump 4, a positive pressure in the compartment 111 opens the second unidirectional valve, simultaneously closing the first unidirectional valve 51; the pressure increase in the second section 142 (downstream of the second unidirectional valve 52) is also such to close the automatic valve 150.

Due to such configuration, when the priming piston pump 4 is actuated, for example manually by a user, it is obtained that the automatic valve 150 closes the bypass conduit 15.

Furthermore, the automatic valve 150 and the bypass conduit are configured so as to have less loss of head for the fluid with respect to the passage thereof through the first section 141 and the first unidirectional valve 51, so that the bypass conduit 15, when the priming piston pump 4 is not operating, is a preferential passage for the fluid.

For example, even in this case the automatic valve 150 can be configured so as to have lower resistance to the passage of the fluid, by dimensioning the opening preload (where a preloaded spring is provided for) and/or the opening of the gap for the passage of the fluid, so that this passage gap is larger than the passage gap offered to the fuel by the first unidirectional valve 51.

In addition, the bypass conduit 15 can be configured so that the passage section thereof is larger than the passage section of the first section 141 of the outlet conduit 14.

Such configuration allows, under normal conditions of operation of the system (i.e. when the fuel traverses the filtering unit 100 to be conveyed to the engine combustion chamber), the first unidirectional valve 51 to remain closed (with the automatic valve 150 open) and all the fuel flows from the first section 141 to the second section 142 of the outlet conduit 14 exclusively through the bypass conduit 15.

In both preferred embodiments illustrated, the priming pump 3,4, same case applying to the first unidirectional valve 51, the second unidirectional valve 52 and the automatic valve, are arranged downstream of the filtering cartridge 2, in the fuel flow direction of the unit 100; thus this advantageously allows protecting such components of the unit from possible clogging thereof. However, such components of the filtering unit 100 can also be fixed to the drinking-glass-shaped body 10 instead of being fixed to the cover 11 or the filtering unit 100 may provide for different equivalent configurations depending on the construction requirements.

In the light of what has been described above, the unit 100 operates as follows.

When filling the filtering unit 100 for the first time, for example subsequently to installation thereof, or any time the casing 1 requires to be filled, for example after replacing the filtering cartridge 2, the priming pump 3,4 is actuated.

By creating a vacuum within the casing 1 a discrete volume of fuel is drawn into the casing during each intake step of the priming pump 3,4, releasing the air therefrom during every pump delivery step, until the casing 1 is filled completely.

In this step, as mentioned, the automatic valve 150 remains closed while the first unidirectional valve 51 and the second unidirectional valve are alternatingly opened and closed, respectively during the intake step of the priming pump 3,4 and in the delivery step thereof.

Then, when the casing 1 is completely filled with fuel the engine can be started for normal operation thereof.

In this step of normal operation of the filtering unit 100, the fuel pressure in the unit is such to open the automatic valve 150, so that the fuel flow from the inlet conduit 13 traverses - in this order - the filtering septum 22, the second chamber 25, the first section 141 of the outlet conduit 14 (upstream of the first closed unidirectional valve 51), the bypass conduit 15 (traversing the open automatic valve 150), the second section 142 of the outlet conduit 14 (downstream of the second closed unidirectional valve 52) and lastly so that it can be conveyed to the combustion chamber.

Since the by-pass conduit 15 is entirely contained in the cover 11 (as well as the outlet conduit 14) and is suitable to directly interconnect the first section 141 and the second section 142 of the outlet conduit 14 itself, as described above, this configuration of the filter assembly 100, as well as offering the advantage that all components (priming pump and valve bodies) are subject to the passage of filtered fluid, allows to have a priming pump 3,4 fitted into the cover 11 with small dimensions, easy to manufacture and having a functional layout.

The invention thus conceived can be subjected to numerous modifications and variants all falling within the inventive concept.

Furthermore, all details can be replaced by other technically equivalent elements.

In practice the materials used, as well as contingent shapes and dimensions, may vary depending on the requirements without departing from the scope of protection of the claims that follow.

## Claims

1. Filtering unit (100) comprising:
- an outer casing (1), comprising a body (10) substantially cup-shaped closed by a cover (11), and provided with at least one inlet conduit (13) for a fluid to be filtered and an outlet conduit (14) for a filtered fluid,
- a filtering cartridge (2) received within said casing (1), so as to filter the fluid which flows from the inlet conduit (13) towards the outlet conduit (14), and
- a pump (3,4) for priming the fluid arranged on said outlet conduit (14) adapted to create vacuum in the volume within the casing (1);
**characterised in that** it comprises
- a bypass conduit (15), branching from the outlet duct (14), adapted to bypass the priming pump (3,4) and it is intercepted by at least one automatic valve (150) adapted to open and close the bypass conduit at least the outlet duct (14) and the bypass conduit (15) being obtained in said cover (11), wherein
- the cover (11) comprises a compartment (111) communicating with the priming pump (3,4) from which there are derived a first section (141) of the outlet conduit (14), intercepted by a first unidirectional valve (51) which opens only for the outflow of the fluid towards the internal of the compartment (111), and a second section (142) of the outlet conduit (14), intercepted by a second unidirectional valve (52) which opens only for the outflow of the fluid towards the external of the compartment (111), said bypass conduit (15) placing a portion of the first section (141) arranged upstream of the first unidirectional valve (51) in communication with a portion of the second section (142) arranged downstream of the second unidirectional valve (52), in the direction of flow of the fluid imparted by the priming pump (3,4).

2. Unit (100) according to claim 1, wherein said first section (141) and said second section (142) define respectively a fluid intake conduit and a fluid delivery conduit of the priming pump (3,4).

3. Unit (100) according to claim 1, wherein the priming pump (3,4) comprises a volumetric reciprocating pump.

4. Unit (100) according to claim 1, **characterised in that** said priming pump comprises a priming membrane pump (3).

5. Unit (100) according to claim 1, **characterised in that** said priming pump comprises a priming piston pump (4).

6. Unit (100) according to claim 1, wherein the automatic valve (150) is of the unidirectional type and it is configured so as to allow the flow of the fluid along the bypass conduit (15) exclusively from the first section (141) to the second section (142) of the outlet conduit (14).

7. Unit (100) according to claim 1 or 3, **characterised in that** the priming pump (3,4), the first (51) and the second (52) unidirectional valve and the automatic valve (150) are configured so as to synchronise the opening of the first unidirectional valve (51) with the closure of the automatic valve (150) due to a vacuum at least in the first section (141), caused by the priming pump (3,4), and, selectively, the opening of the second unidirectional valve (52) with the closure of the automatic valve (150) due to a pressure increase in the second section (142), caused by the priming pump.

## Patentansprüche

1. Filtereinheit (100), Folgendes umfassend:
ein Außengehäuse (1), das einen im Wesentlichen napfförmigen Körper (10) umfasst, der durch eine Abdeckung (11) verschlossen ist, und der mit mindestens einem Einlasskanal (13) für ein zu filterndes Fluid und einem Auslasskanal (14) für ein gefiltertes Fluid ausgestattet ist,
eine Filterkartusche (2), die in dem Gehäuse (1) aufgenommen ist, sodass sie das Fluid filtert, das vom Einlasskanal (13) zum Auslasskanal (14) strömt, und
eine Pumpe (3, 4) zum Ansaugen des Fluids, die am Auslasskanal (14) angeordnet und dafür eingerichtet ist, einen Unterdruck im Volumen innerhalb des Gehäuses (1) zu erzeugen,
**dadurch gekennzeichnet, dass** sie Folgendes umfasst:
einen Umgehungskanal (15), der von der Auslassleitung (14) abzweigt und dafür eingerichtet ist, die Ansaugpumpe (3, 4) zu umgehen, und der durch mindestens ein automatisches Ventil (150) abgesperrt ist, das dafür eingerichtet ist, den Umgehungskanal zu öffnen und zu schließen, wobei mindestens der Auslasskanal (14) und der Umgehungskanal (15) in der Abdeckung (11) erzielt sind, wobei
die Abdeckung (11) ein Fach (111) umfasst, das mit der Ansaugpumpe (3, 4) in Verbindung steht und von dem ein erster Abschnitt (141) des Auslasskanals (14), der durch ein erstes Rückschlagventil (51) abgesperrt ist, das sich nur für das zum Inneren des Fachs (111) ausströmende Fluid öffnet, und einen zweiten Abschnitt (142) des Auslasskanals (14) abgeleitet sind, der durch ein zweites Rückschlagventil (52) abgesperrt ist, das sich nur für das zur Außenseite des Fachs (111) ausströmende Fluid öffnet, wobei der Umgehungskanal (15) einen Teil des ersten Abschnitts (141), der stromaufwärts des ersten Rückschlagventils (51) angeordnet ist, mit einem Teil des zweiten Abschnitts (142), der stromabwärts des zweiten Rückschlagventils (52) angeordnet ist, verbindet und zwar in der Strömungsrichtung des von der Ansaugpumpe (3, 4) weitergeleiteten Fluids.

2. Einheit (100) nach Anspruch 1, wobei der erste Abschnitt (141) und der zweite Abschnitt (142) einen Fluidansaugkanal beziehungsweise einen Fluidabgabekanal der Ansaugpumpe (3, 4) definieren.

3. Einheit (100) nach Anspruch 1, wobei die Ansaugpumpe (3, 4) eine volumetrische Kolbenpumpe umfasst.

4. Einheit (100) nach Anspruch 1, **dadurch gekennzeichnet, dass** die Ansaugpumpe eine Membranansaugpumpe (3) umfasst.

5. Einheit (100) nach Anspruch 1, **dadurch gekennzeichnet, dass** die Ansaugpumpe eine Kolbenansaugpumpe (4) umfasst.

6. Einheit (100) nach Anspruch 1, wobei das automatische Ventil (150) vom Rückschlagtyp ist und so konfiguriert ist, dass es das Strömen des Fluids entlang des Umgehungskanals (15) ausschließlich vom ersten Abschnitt (141) zum zweiten Abschnitt (142) des Auslasskanals (14) gestattet.

7. Einheit (100) nach Anspruch 1 oder 3, **dadurch gekennzeichnet, dass** die Ansaugpumpe (3, 4), das erste (51) und das zweite (52) Rückschlagventil und das automatische Ventil (150) so konfiguriert sind, dass sie das Öffnen des ersten Rückschlagventils (51) mit dem Schließen des automatischen Ventils (150) aufgrund eines von der Ansaugpumpe (3, 4) bewirkten Unterdrucks mindestens im ersten Abschnitt (141) und selektiv das Öffnen des zweiten Rückschlagventils (52) mit dem Schließen des automatischen Ventils (150) aufgrund eines von der Ansaugpumpe bewirkten Druckanstiegs im zweiten Abschnitt (142) synchronisieren.

## Revendications

1. Unité de filtration (100) comprenant :
- un boîtier externe (1) comprenant un corps (10) essentiellement cupulaire fermé par un couvercle (11), et pourvu d'au moins un conduit d'entrée (13) pour un fluide à filtrer et un conduit de sortie (14) pour un fluide filtré,
- une cartouche de filtration (2) logée dans ledit boîtier (1) de manière à filtrer le fluide qui s'écoule du conduit d'entrée (13) vers le conduit de sortie (14), et
- une pompe (3, 4) pour amorcer le fluide, agencée sur ledit conduit de sortie (14) et adaptée pour créer un vide dans le volume intérieur du boîtier (1) ;
**caractérisée en ce qu'**elle comprend
- un conduit de dérivation (15) qui s'embranche à partir du conduit de sortie (14), adapté pour contourner la pompe d'amorçage (3, 4) et intercepté par au moins un clapet automatique (150) adapté pour ouvrir et fermer le conduit de dérivation, ledit au moins un conduit de sortie (14) et ledit conduit de dérivation (15) étant réalisés dans ledit couvercle (11), dans laquelle
- le couvercle (11) comprend un compartiment (111) qui communique avec la pompe d'amorçage (3, 4) à partir duquel est dérivée une première section (141) du conduit de sortie (14), interceptée par un premier clapet antiretour (51) qui s'ouvre uniquement pour la sortie du fluide vers l'intérieur du compartiment (111), et une deuxième section (142) du conduit de sortie (14), interceptée par un deuxième clapet antiretour (52) qui s'ouvre uniquement pour la sortie du fluide vers l'extérieur du compartiment (111), ledit conduit de dérivation (15) plaçant une partie de la première section (141) agencée en amont du premier clapet antiretour (51) en communication avec une partie de la deuxième section (142) agencée en aval du deuxième clapet antiretour (52), dans la direction d'écoulement du fluide impartie par la pompe d'amorçage (3, 4).

2. Unité (100) selon la revendication 1, dans laquelle ladite première section (141) et ladite deuxième section (142) définissent respectivement un conduit d'aspiration de fluide et un conduit de refoulement de fluide de la pompe d'amorçage (3, 4).

3. Unité (100) selon la revendication 1, dans laquelle la pompe d'amorçage (3, 4) comprend une pompe volumétrique à mouvement alternatif.

4. Unité (100) selon la revendication 1, **caractérisée en ce que** ladite pompe d'amorçage comprend une pompe d'amorçage à membrane (3).

5. Unité (100) selon la revendication 1, **caractérisée en ce que** ladite pompe d'amorçage comprend une pompe d'amorçage à piston (4).

6. Unité (100) selon la revendication 1, dans laquelle le clapet automatique (150) est de type antiretour et est configuré de manière à permettre l'écoulement du fluide dans le conduit de dérivation (15) exclusivement de la première section (141) vers la deuxième section (142) du conduit de sortie (14).

7. Unité (100) selon la revendication 1 ou 3, **caractérisée en ce que** la pompe d'amorçage (3, 4), le premier clapet antiretour (51), le deuxième clapet antiretour (52) et le clapet automatique (150) sont configurés de manière à synchroniser l'ouverture du premier clapet antiretour (51) avec la fermeture du clapet automatique (150) du fait d'un vide au moins dans la première section (141), causé par la pompe d'amorçage (3, 4), et sélectivement l'ouverture du deuxième clapet antiretour (52) avec la fermeture du clapet automatique (150) du fait d'une augmentation de pression dans la deuxième section (142), causée par la pompe d'amorçage.
